**Europäisches Patentamt**

(19) **European Patent Office**

**Office européen des brevets**

(11) Veröffentlichungsnummer : **0 182 087**
**B1**

(12) **EUROPÄISCHE PATENTSCHRIFT**

(45) Veröffentlichungstag der Patentschrift :
28.06.89

(51) Int. Cl.⁴ : **H 04 L 11/16**

(21) Anmeldenummer : 85113021.1

(22) Anmeldetag : 14.10.85

(54) Schaltungsanordnung zur Kollisionserkennung.

(30) Priorität : 16.10.84 DE 3437851

(43) Veröffentlichungstag der Anmeldung :
28.05.86 Patentblatt 86/22

(45) Bekanntmachung des Hinweises auf die Patenterteilung : 28.06.89 Patentblatt 89/26

(84) Benannte Vertragsstaaten :
AT BE DE FR GB IT NL

(56) Entgegenhaltungen :
EP–A– 0 049 917
US–A– 4 409 592

(73) Patentinhaber : **Siemens Aktiengesellschaft Berlin
und München
Wittelsbacherplatz 2
D-8000 München 2 (DE)**

(72) Erfinder : **Flasche, Ulrich
Wolfratshauserstrasse 64a
D-8023 Pullach (DE)**

Jouve, 18, rue St-Denis, 75001 Paris, France

**Beschreibung**

Für einen schnellen Austausch von Digitalsignalen zwischen häufig wechselnden Gegenstellen (Stationen), beispielsweise zwischen Telekommunikations-Terminals, zwischen einer Datenverarbeitung dienenden Rechnern oder auch zwischen vermittlungstechnischen Prozessoren, finden vielfach Busleitungssysteme Anwendung, in denen die jeweils angeschlossenen Stationen über Sende- und Empfangseinrichtungen einen wahlfreien Zugriff (Random Access) zu dem Busleitungssystem haben. Die dabei von einer Station ausgesendeten Digitalsignale werden auf dem Bus nach beiden Seiten hin übertragen und nach Maßgabe vorangestellter Adressen nur von der (den) durch die Adresse(n) bezeichneten Teilnehmerstation(en) aufgenommen. Für die Regelung des Zugriffs zum Busleitungssystem hat dabei besonders das sog. CSMA/CD-(Carrier Sense Multiplex Access with Collision Detection)-Verfahren Bedeutung : Bevor eine Station zu senden beginnt, horcht sie in den Bus hinein, ob dort bereits ein Übertragungsvorgang stattfindet. Zutreffendenfalls wartet sie zunächst dessen Ende ab ; dann beginnt die betreffende Station zu senden, wobei sie zunächst weiter « mithört », bis sie nach einer gewissen Zeitspanne (round trip delay time) sicher ist, daß alle anderen Stationen ihr Senden bemerken konnten. Hat in gleicher Weise eine andere Station etwa gleichzeitig zu senden begonnen, so werden beide Stationen eine Kollision ihrer Digitalsignale mit denen der jeweils anderen Station feststellen, woraufhin sie ihren Sendevorgang jeweils abbrechen, um nach einer Zufallszeitspanne damit erneut zu beginnen.

Das Mehrfachsenden kann dabei an Hand einer auf dem Busleitungssystem auftretenden Pegelüberhöhung, bedingt durch die Addition zweier Signale, erkannt werden, was allerdings eine relativ aufwendige Analogtechnik, insbesondere in Form sehr genauer symmetrischer (mit zwei Spannungen zu speisender) Operationsverstärker erfordert.

Eine einfache Methode, mit der ein Mehrfachsenden erkannt werden kann, besteht darin, daß die aktive Station das von ihr gerade abzugebende (und abgegebene) Signal mit dem an ihrer Empfangseinrichtung auf dem Busleitungssystem herrschenden Signalzustand vergleicht, wobei ein Signal(zustands)unterschied dann eine Kollision anzeigt. Die Erkennung eines solchen Signal(zustands)unterschiedes setzt voraus, daß sich auf dem Busleitungssystem der eine Signalzustand physikalisch stets gegenüber dem (bei Binärsignalen) anderen Signalzustand durchsetzt. Die Erkennung kann dann in der Weise geschehen, dass die Sende- und Empfangssignalzustände zyklisch abgetastet und danach miteinander verglichen werden, was indessen mit Zeitlücken verbunden ist, auf Grund derer eine eingetretene Kollision u. U. nicht erkannt wird.

Die Erfindung stellt sich demgegenüber die Aufgabe, eine Kollisionserkennung beim Zugriff einer Teilnehmerstation auf ein Busleitungssystem mit einfachen Mitteln und zugleich schnell und mit hoher Sicherheit zu ermöglichen.

Die Erfindung betrifft eine Schaltungsanordnung zur Kollisionserkennung beim Zugriff einer Teilnehmerstation auf ein Busleitungssystem, an das die Empfangseinrichtungen und die zweier Signalzustände, deren einer einen gegenüber dem anderen Signalzustand auf dem Busleitungssystem sich durchsetzenden Dominanz-Signalzustand bildet, fähigen Sendeeinrichtungen solcher Teilnehmerstationen angeschlossen sind, durch Vergleich des in der Teilnehmerstation gerade gegebenen Sendesignalzustandes mit dem auf dem Busleitungssystem, insbesondere Bussystem mit zwei Signalleitern und einem Leitungsschirm (Masse), gerade herrschenden Signalzustand ; diese Schaltungsanordnung ist erfindungsgemäß dadurch gekennzeichnet, daß sie eine Zugriffskollision anhand eines auf dem Busleitungssystem vor sich gehenden Signalüberganges in den Dominanz-Signalzustand während eines Andauerns des anderen Signalzustands in ihrer Sendeeinrichtung feststellt.

Die Erfindung, die im Rahmen eines Signalszustandsvergleichs eine lückenlose Kollisionsdetektion ermöglicht, kann dabei vorzugseise so ausgestaltet sein, daß ein flankengesteuertes bistabiles Kippglied vorgesehen ist, dessen Setzeingang mit einer das jeweilige Sendesignal führenden Leitung der Teilnehmerstation verbunden ist, von deren Empfangseinrichtung der Takteingang des flankengesteuerten bistabilen Kippgliedes mit einem dem auf dem Busleitungssystem jeweils gegebenen Signalzustand entsprechenden Signal beaufschlagt ist.

Es sei an dieser Stelle bemerkt, daß (aus EP-A-00 49 917) ein Telekommunikationssystem mit einem Bus bekannt ist, in welchem ein Telekommunikations-Terminal bei Abgabe eines dem einen Signalzustand entsprechenden Signals (« O ») zur Beseitigung einer sonst gegebenen Dominanz dieses Signalzustandes den Ausgangswiderstand seiner Sendeeinrichtung auf die Höhe des Busleitungs-Wellenwiderstands erhöht, wobei die Kollisionserkennung dann anhand des Empfangs eines dem anderen Signalzustand entsprechenden Signals (« I ») während des Andauerns der Widerstandserhöhung geschieht. Dieses bekannte Telekommunikationssystem weist mit der durch die Widerstandserhöhung bewirkten Beseitigung einer sonst gegebenen Dominanz des genannten einen Signalzustandes einen prinzipiell anderen Weg, als ihn die Erfindung geht.

Es sei außerdem bemerkt, daß es (aus US-A-44 09 592) bekannt ist, eine Kollision von Terminals beim Zugriff auf einen Bus daran zu erkennen, daß während eines am Ausgang einer Sendeeinrichtung vor sich gehenden Signalüberganges der bisherige Signalzustand, der an sich auf Grund von inneren Verzögerungen am Ausgang der zugehörigen Empfangseinrichtung noch andauern müßte, dort nicht mehr andauert. Eine solche Kollisionserkennung setzt allerdings entsprechende, hinreichend große innere Verzögerungen voraus, — eine Voraussetzung, von der man insbesondere angesichts des Strebens nach immer schnelleren Schaltungen nicht ohne weiteres ausgehen kann.

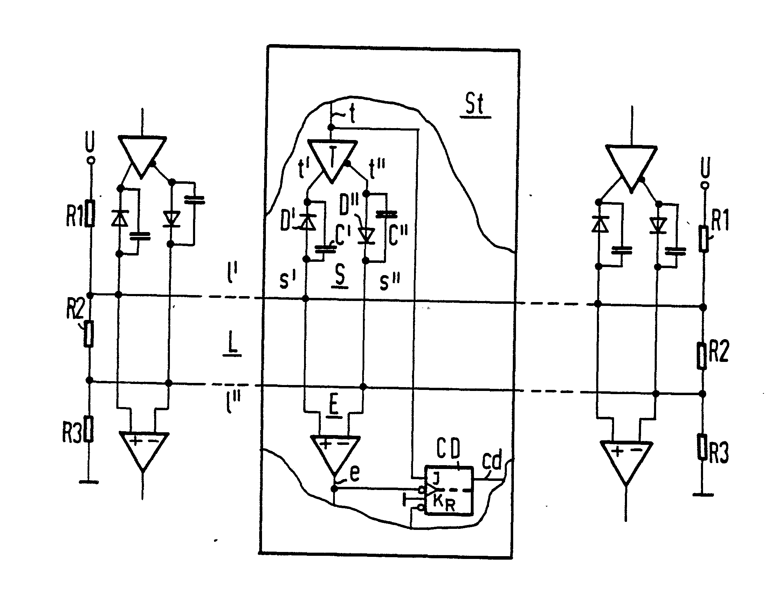

Auf die Erfindung zurückkommend sei diese nun anhand der Zeichnung noch näher erläutert.

Die Zeichnung zeigt schematisch in einem zum Verständnis der Erfindung erforderlichen Umfange zunächst ein Bussystem L mit zwei Signaladern I', I'' und einem in der Zeichnung nicht eigens dargestellten Leitungsschirm (Masse, Erde), wie es auch schon an anderer Stelle (EP-A-171 555) beschrieben wird; ein solches Busleitungssystem kann vorzugsweise durch ein zwei verdrallte Adern aufweisendes geschirmtes (Twisted-Pair-) Kabel mit einem Wellenwiderstand von beispielsweise 150 Ohm gebildet sein, wobei die zwei verdrallten Adern die in der Zeichnung dargestellten Signalleiter I', I'' bilden. An die beiden Signalleiter I', I'' sind jeweils über zwei Differenzausgänge s', s'' Sendeeinrichtungen S angeschlossen; diese Sendeeinrichtungen S mögen zusammen mit über Differenzeingänge +, — ebenfalls an die beiden Signalleiter I', I'' angeschlossenen Empfangseinrichtungen E jeweils zu einer im übrigen nicht näher dargestellten Teilnehmerstation St gehören, beispielsweise einem Telekommunikations-Endgerät, einem Rechner oder einem Vermittlungsprozessor. Die Sendeeinrichtungen S weisen jeweils einen mit zwei Differenzausgängen t', t'' versehenen Bussender T auf, bei dem es sich um einen neben zwei Signalzuständen auch noch einen Ruhezustand als dritten Zustand aufweisenden Tristate-Bussender beispielsweise des Typs AM26LS31 (AMD) oder SN74ALS1631 (TI) oder auch um einen keinen solchen dritten Zustand aufweisenden Bussender beispielsweise des Typs 9638 (Fairchild) handeln kann. In jedem Falle haben die Sendeeinrichtungen S zwei mögliche Signalzustände, wobei der (bei einer Sendeeinrichtung S gegebene) eine Signalzustand (z. B. ein Signalzustand LOW) sich gegenüber dem (bei einer anderen Sendeeinrichtung gegebenen) anderen Signalzustand (im Beispiel der Signalzustand HIGH) im Busleitungssystem L durchsetzt, d. h. einen Dominanzsignalzustand im Busleitungssystem bewirkt.

In dem genannten anderen Signalzustand (HIGH) läßt die betreffende Sendeeinrichtung S die beiden Signalleiter I', I'' — und damit auch die daran angeschlossenen Teilnehmerstationen — zumindest angenähert unbelastet. Hierzu sind in dem in der Zeichnung skizzierten Ausführungsbeispiel eines Busleitungssystems bei den jeweils mit einem zwei Differenzausgänge t', t'' aufweisenden Bussender T gebildeten Sendeeinrichtungen S die zwei Differenzausgänge t', t'' über zwei in dem genannten anderen Signalzustand (HIGH) im Sperrzustand befindliche Dioden D', D'' mit den zwei Signalleitern I', I'' verbunden. Diese Dioden, die eine niedrige Durchlaßspannung und einen niedrigen Durchlaßwiderstand haben, schalten in dem genannten einen Signalzustand (LOW) die an den beiden einen niedrigen Innenwiderstand aufweisenden Bussender-Ausgängen t' und t'' auftretenden Potentiale praktisch unverändert auf die beiden Signalleiter I' bzw. I'' durch, so daß dort in dem genannten einen Signalzustand (LOW) die betreffenden Bussendepotentiale von beispielsweise etwa 0,9 V auf dem Signalleiter I' und etwa 2,7 V auf dem Signalleiter I'' herrschen. Befindet sich die gerade betrachtete Sendeeinrichtung S in ihrem anderen Signalzustand (HIGH), in dem am Bussenderausgang t' ein Bussendepotential von im Beispiel etwa 3,7 V und am Bussenderausgang t'' ein Bussendepotential von im Beispiel etwa 0,1 V auftritt, und herrschen gleichwohl von einer anderen Bussendeeinrichtung her die zuvor angegebenen Potentialverhältnisse auf den beiden Signalleitern I' und I'', so sind die beiden Dioden D' und D'' der gerade betrachteten Sendeeinrichtung S gesperrt, und die jetzt an ihren beiden Signalausgängen s' und s'' jeweils einen gegenüber dem bei dem genannten einen Signalzustand — bei im Durchlaßzustand befindlichen Dioden — gegebenen niedrigen Innenwiderstand großen Innenwiderstand aufweisende Sendeeinrichtung S läßt die beiden Signalleiter I', I'' praktisch unbelastet, mit anderen Worten, die Sendeeinrichtung S und die Signalleiter I', I'' sind praktisch voneinander entkoppelt.

Damit auch dann, wenn sich gerade alle an das Busleitungssystem L angeschlossenen Sendeeinrichtungen in dem genannten anderen Signalzustand (oder auch in einem dritten, Inaktiv-Zustand (Tristate)) befinden, auf den Signalleitern I', I'' eine definierte Signalspannung auftritt, können, wie dies auch aus der Zeichnung ersichtlich wird, die beiden Signalleiter I', I'' an zumindest einen Spannungsteiler U-R1-R2-R3 Masse angeschlossen sein, dessen Innenwiderstand (R2∥(R1+R3)) groß gegenüber dem bei dem genannten einen Signalzustand gegebenen Innenwiderstand einer Sendeeinrichtung S ist. Dieser Spannungsteiler kann im Beispiel, zwischen einem Potential U von 5 V und Masse liegend, mit zwei 330-Ohm-Widerständen R1, R3 und einem dazwischenliegenden 270-Ohm-Widerstand aufgebaut sein, womit er dann im betrachteten Betriebsfall ein Potential von etwa 3,2 V an den Signalleiter I' und ein Potential von etwa 1,8 V an den Signalleiter I'' anlegt.

Die im Vorstehenden erläuterte Dominanz des einen Signalzustandes über den anderen macht es möglich, Zugriffskollisionen, d. h. ein gleichzeitiges Senden mehrerer Teilnehmerstationen St, durch Vergleich des in einer Teilnehmerstation gerade gegebenen Sendesignalzustandes mit dem auf dem Busleitungssystem L herrschenden Signalzustand festzustellen. Hierzu ist in der in der Zeichnung skizzierten Teilnehmerstation St ein flankengesteuertes bistabiles JK-Kippglied CD vorgesehen, dessen Setzeingang J mit der das jeweilige Sendesignal führenden Eingangsleitung t des Bussenders T verbunden ist und dessen dynamischer Takteingang mit der Ausgangsleitung e des Differenzverstärkers der Empfangeinrichtung E verbunden ist ; der Takteingang wird damit jeweils mit einem dem auf dem Busleitungssystem L gerade gegebenen Signalzustand entsprechenden Signal beaufschlagt. Kommt es nun auf dem Busleitungssystem L zu einem Signalübergang in den Dominanz-Signalzustand (LOW), so wird diese Signalzustandsänderung am Takteingang des bistabilen Kippgliedes CD wirksam. Dauert zugleich der andere Signalzustand (HIGH) auf der Leitung t der Sendeeinrichtung S und damit am J-Eingang des bistabilen Kippgliedes CD an, so wird das Kippglied CD gesetzt und gibt damit an seinem Ausgang cd ein einen Mehrfachzugriff zum Busleitungssystem L anzeigendes Kollisionssignal ab. Dieses Kollisionssignal kann dann in der Station St einen Abbruch des Sendevorgangs auslösen, was hier jedoch nicht weiter verfolgt zu werden braucht, da dies zum Verständnis der Erfindung nicht mehr erforderlich ist.

Abschließend sei noch bemerkt, daß das bistabile Kippglied CD bei Beendigung des Buszugriffs durch die Station St über einen Rücksetzeingang R wieder rückgesetzt werden kann, was hier indessen ebenfalls nicht weiter verfolgt zu werden braucht, da auch dies zum Verständnis der Erfindung nicht mehr erforderlich ist.

## Patentansprüche

1. Schaltungsanordnung zur Kollisionserkennung beim Zugriff einer Teilnehmerstation (St) auf ein Busleitungssystem (L), an das die Empfangseinrichtungen (E) und die zweier Signalzustände (LOW, HIGH), deren einer einen gegenüber dem anderen Signalzustand (HIGH) auf dem Busleitungssystem (L) sich durchsetzenden Dominanz-Signalzustand (LOW) bildet, fähigen Sendeeinrichtungen (S) solcher Teilnehmerstationen (St) angeschlossen sind, durch Vergleich des in der Teilnehmerstation (St) gerade gegebenen Sendesignalzustandes mit dem auf dem Busleitungssystem (L), insbesondere Bussystem mit zwei Signalleitern (I', I'') und einem Leitungsschirm (Masse), gerade herrschenden Signalzustand, dadurch gekennzeichnet, daß sie eine Zugriffskollision anhand eines während eines auf dem Busleitungssystem (L) vor sich gehenden Signalüberganges (HIGH-LOW) in den Dominanz-Signalzustand (LOW) gegebenen Andauerns des anderen Signalzustands (HIGH) in ihrer Sendeeinrichtung (S) feststellt.

2. Schaltungsanordnung nach Anspruch 1, dadurch gekennzeichnet, daß ein flankengesteuertes bistabiles Kippglied (CD) vorgesehen ist, dessen Setzeingang (J) mit einer das jeweilige Sendesignal führenden Leitung (t) der Teilnehmerstation (St) verbunden ist, von deren Empfangseinrichtung (E) der Takteingang des flankengesteuerten bistabilen Kippgliedes (CD) mit einem dem auf dem Busleitungssystem (L) jeweils gegebenen Signalzustand entsprechenden Signal beaufschlagt ist.

## Claims

1. Circuit arrangement for collision detection in the accessing of a subscriber station (St) on a bus line system (L), to which the receiving devices (E) and the transmitting devices (S) of such subscriber stations (st), capable of two signal states (LOW, HIGH), of which one forms a dominance signal state (LOW) prevailing over the other signal state (HIGH) on the bus line system (L), are connected, by comparison of the transmitter signal state existing at that time in the subscriber station (St) with the signal state existing at that time on the bus line system (L), in particular a bus system with two signal conductors (I', I'') and a line shield (earth), characterized in that it establishes an access collision on the basis of a continuance during the signal transition .(HIGH-LOW) occurring on the bus line system (L) into the dominance signal state (LOW) of the other signal state (HIGH) in its transmitting device (S).

2. Circuit arrangement according to Claim 1, characterized in that an edge-controlled bistable element (CD) is provided, the set input (J) of which is connected to a line (t), carrying the respective transmission signal, of the subscriber station (St), by the receiving device (E) of which the clock input (C) of the edgecontrolled bistable element (CD) has applied to it a signal corresponding to the signal state existing in each case on the bus line system (L).

## Revendications

1. Montage pour identifier des collisions lors de l'accès d'un poste d'abonné (St) à un système de lignes (L) formant bus, auquel sont raccordés les dispositifs de réception (E) et les dispositifs d'émission (S) de tels postes d'abonnés (St), qui peuvent fournir des signaux à deux états (LOW, HIGH), dont le premier forme un état de signal dominant (LOW) s'imposant par rapport au second état de signal (HIGH) dans le système de lignes (L) formant bus, par comparaison de l'état de signal d'émission, défini précisément dans le poste d'abonné (St), à l'état de signal, qui est précisément présent dans le système de lignes (L) formant bus, notamment un système formant bus comportant deux conducteurs (I', I'') de transmission de signaux et un blindage de ligne (masse), caractérisé par le fait qu'il constate une collision d'accès grâce à la persistance pendant un passage de signal (HIGH-LOW), intervenant dans le système de lignes (L) formant bus, à l'état de signal dominant (LOW) de l'autre état de signal (HIGH), dans le dispositif d'émission (S) du poste.

2. Montage suivant la revendication 1, caractérisé par le fait qu'il est prévu un circuit à bascule bistable (CD), qui est commandé par les flancs des impulsions et dont l'entrée de positionnement (J) est reliée à une ligne (t), véhiculant le signal d'émission respectif, du poste d'abonné (St), dont le dispositif de réception (E) charge l'entrée de cadence du circuit à bascule bistable (CD), commandé par les flancs des impulsions, par un signal correspondant à un état de signal respectivement défini dans le système de lignes (L) formant bus.